# EUROPÄISCHE PATENTSCHRIFT

(11) **EP 2 201 549 B1**
(45) Veröffentlichungstag und Bekanntmachung des Hinweises auf die Patenterteilung: **02.03.2011**
(21) Anmeldenummer: 08803767.6
(22) Anmeldetag: 05.09.2008
(51) Int. Cl.: G08G 1/01, H04W 4/04, H04W 64/00, G08G 1/015

(54) **VERFAHREN UND VERKEHRSNACHFRAGE-ANALYSEEINHEIT ZUR BESTIMMUNG VON QUELLE-ZIEL-NACHFRAGEDATEN VON VERKEHRSFLÜSSEN**
METHOD AND TRAFFIC REQUIREMENTS ANALYSIS DEVICE FOR DETERMINING SOURCE-DESTINATION REQUIREMENTS DATA OF TRAFFIC FLOWS
PROCÉDÉ ET UNITÉ D'ANALYSE DE DEMANDE DE TRAFIC PERMETTANT DE DÉTERMINER DES DONNÉES DE DEMANDE SOURCE-DESTINATION DE FLUX DE CIRCULATION

(30) Priorität: 26.10.2007 DE 102007051651; 07.04.2008 DE 102008017568
(43) Veröffentlichungstag der Anmeldung: 30.06.2010
(73) Patentinhaber: Siemens Aktiengesellschaft, 80333 München (DE)
(72) Erfinder: ALTHEN, Sebastian, 81543 München (DE); MATHIAS, Paul, 52072 Aachen (DE)
(86) Internationale Anmeldenummer: PCT/EP2008/061798
(87) Internationale Veröffentlichungsnummer: WO 2009/053146

(56) Entgegenhaltungen:
- WO-A-02/071364
- WO-A-03/056532
- DE-A1- 10 334 140
- DE-A1-102005 043 896

## Beschreibung

Die vorliegende Erfindung betrifft ein Verfahren zur Bestimmung von Quelle-Ziel-Nachfragedaten von Verkehrsflüssen und eine hierfür geeignete Verkehrsnachfrage-Analyseeinheit.

Quelle-Ziel-Nachfragedaten stellen eine spezielle Form von Verkehrsnachfragedaten dar, die die Basis für Verkehrsplanungen, Verkehrsumlegungen, Netzsteuerungen oder Verkehrsmanagementstrategien bildet. Sie repräsentieren die Anzahl der Verkehrsteilnehmer und/oder Fahrzeuge, die sich von einem bestimmten Quelle-Bereich in einen bestimmten Ziel-Bereich bewegen. Mit Hilfe dieser Daten kann z. B. einfacher abgeschätzt werden, wie sich Verkehrsströme verändern, wenn eine bestimmte Verkehrsregelungsmaßnahme vorgenommen wird, oder wie sich die Verkehrsnachfrage im Laufe der Zeit entwickelt.

Grundsätzlich wird unterschieden zwischen so genannten statischen Quelle-Ziel-Nachfragedaten, die einen hohen Aggregationsgrad besitzen und Mittelwerte, beispielsweise Tages-Mittelwerte, enthalten, und so genannten dynamischen Quelle-Ziel-Nachfragedaten, die eine feinere zeitliche Auflösung bieten, beispielsweise in Form von Stundenzeiträumen. Statische Quelle-Ziel-Nachfragedaten finden oft in der Verkehrsplanung Verwendung, während dynamische Quelle-Ziel-Nachfragedaten große Bedeutung für Online-Systeme wie Verkehrsmanagement- oder Verkehrssteuerungssysteme haben.

Derzeit sind Quelle-Ziel-Nachfragedaten nicht direkt, beispielsweise mit Hilfe automatischer Systeme erfassbar. Damit stellt ihre Generierung ein erhebliches Problem dar, da die Daten entsprechend meist nicht aktuell und belastbar genug sind. Üblicherweise werden sie nämlich durch Erhebungen, beispielsweise Haushaltsbefragungen, ermittelt, wobei Haushaltsmitglieder nach ihren typischen Fahrgewohnheiten befragt werden. Diese Vorgehensweise ist sehr aufwendig, kostenintensiv und liefert nur eine sehr kleine Stichprobe gemessen an der Grundgesamtheit aller Reisenden.

Weiter werden typische Quelle-Ziel-Nachfragedaten für kleinere Zeitscheiben (etwa stundenweise für Werktage) aus statischen Nachfragedaten mit Hilfe von Verkehrsumlegungsmodellen abgeleitet. Dabei werden die Nachfragedaten so kalibriert, dass die vom Umlegungsmodell berechneten Routenbelastungen mit gegebenen historischen Detektorwerten übereinstimmen und eine gegebene Zielfunktion optimiert wird. Die sich aus der kleinen Stichprobe und der Kalibrierung ergebenden Fehler sind maßgeblich für die Qualität von Verkehrsmodellen verantwortlich.

Aus der Offenlegungsschrift DE 103 34 140 A1 ist ein Verfahren und System zur Ermittlung von Verkehrsdaten bekannt, wobei Mobilfunkdaten von Verkehrsteilnehmern in einer Zentrale des jeweiligen Mobilfunk-Betreibers erhoben und ausgewertet werden. Zum einen soll die lokale Verkehrsstärke, d.h. die Anzahl an einen Messquerschnitt pro Zeiteinheit passierenden Fahrzeugen, ermittelt werden. Hierzu wird der Messquerschnitt als Übergangsbereicht zwischen zwei Mobilfunk-Zellen festgelegt und durch Erfassung auf dem Straßenabschnitt stattfindender Zellenwechsel die Verkehrsstärke ermittelt. Zum anderen werden Quelle-Ziel-Matrizen in einem Straßennetz ermittelt, in dem Anfangs- und Endpositionen von Gesprächen und die Gesprächszeit anonymisiert über eine gewissen Zeitspanne aufgezeichnet werden. Mit Hilfe eines Routing-Verfahrens wird die kürzeste Fahrstrecke zwischen Anfangs- und Endpunkt ermittelt.

Solchermaßen generierte Nachfragedaten können naturgemäß erst recht kurz- und mittelfristige Nachfrageveränderungen, die aufgrund aktueller Ereignisse (Veranstaltungen, Baustellen, Störungen) entstehen, nicht wiedergeben.

Der Erfindung liegt daher die Aufgabe zugrunde, ein Verfahren bzw. eine Verkehrsnachfrage-Analyseeinheit bereitzustellen, mit deren Hilfe einfacher, effektiver und genauer Quelle-Ziel-Nachfragedaten von Verkehrsflüssen bestimmbar sind.

Diese Aufgabe wird gelöst durch eine Verfahren nach Anspruch 1 und eine Einheit nach Anspruch 14.

Erfindungsgemäß wird diese Aufgabe durch ein Verfahren zur Bestimmung von Quelle-Ziel-Nachfragedaten von Verkehrsflüssen einer Mehrzahl von Verkehrsteilnehmern von definierten geografischen Quelle-Bereichen zu definierten geografischen Ziel-Bereichen gelöst, wobei jeweils die Bewegung eines einzelnen Verkehrsteilnehmers von einem Quelle-Bereich in einen Ziel-Bereich mit Hilfe einer Mobilfunk-Signalisierung erfasst wird, die sich auf ein von dem einzelnen Verkehrsteilnehmer mitgeführtes Mobilfunk-Endgerät bezieht, wobei Quelle-Bereich und Ziel-Bereich auf Basis von vorgegebenen Netz-Ortsbereichen eines Mobilfunk-Netzes definiert sind, und jeweils die Anzahl der Verkehrsteilnehmer, die sich vom selben Quelle-Bereich in den selben Ziel-Bereich bewegt haben, ermittelt wird.

Unter einem Mobilfunk-Netz wird in diesem Zusammenhang ein zelluläres Netz für mobile Sende- und/oder Empfangsgeräte, also Mobilfunk-Endgeräte, beispielsweise Mobiltelefone, verstanden. Diese können aufgrund ihrer eindeutigen Identifikationsnummer jederzeit identifiziert und in ihrer Bewegung verfolgt werden. Mobilfunk-Netze, z. B. Netzwerke auf Basis des GSM (Global System for Mobile Communications) Kommunikationsstandards, sind in so genannte Funkzellen eingeteilt, also lokale Einheiten mit einer Sende- und Empfangsstation. Sie, beziehungsweise Cluster solcher Funkzellen, werden als "Ortsbereiche" des Mobilfunk-Netzes verstanden.

Im Rahmen des erfindungsgemäßen Verfahrens werden also Quelle-Ziel-Nachfragedaten dadurch ermittelt, dass solche Netz-Ortsbereiche eines Mobilfunk-Netzes als geographische Einheiten für solche Bereiche dienen, die jeweils Quelle- oder Ziel-Bereiche einzelner Verkehrsteilnehmer sein können. Durch die Signale, die im Mobilfunknetz generiert werden, ist eine örtliche Veränderung von Mobilfunk-Endgeräten, im Beispiel also Mobiltelefonen, verfolgbar. Als "Quelle-Bereich" wird im Rahmen der Erfindung ein solcher Bereich verstanden, von dem ein Verkehrsteilnehmer abfährt; als sein "Ziel-Bereich" der jeweilige Ankunftsbereich des Verkehrsteilnehmers. Die Menge der ermittelten Verkehrsteilnehmer, die vom selben Quelle-Bereich in denselben Ziel-Bereich verkehren, wird durch Zählen bzw. Aufsummieren ermittelt und entweder in absoluten Zahlen oder in Relation zu Vergleichsgrößen angegeben.

Als Zähleinheit wird hier die Anzahl der Verkehrsteilnehmer definiert. Dabei sind Verkehrsteilnehmer üblicherweise Einzelpersonen, denn ihnen wird gemäß dem erfindungsgemäßen Verfahren ein Mobilfunk-Endgerät zugeordnet. In einer höheren Abstraktionsebene und unter Zuhilfenahme beispielsweise statistischer oder anderweitiger Erhebungsdaten kann dadurch auf Fahrzeugeinheiten hochgerechnet werden.

Aus dem Stand der Technik - beispielsweise in der US 6650948 B1 - ist eine Verkehrsflussbeobachtung mit Hilfe von Mobilfunknetzen zwar bekannt, doch handelt es sich hier nicht um eine Aufschlüsselung nach Quelle-Ziel-Kriterien. Erfindungsgemäß wird dagegen eine zusätzliche Logik angewandt, die einen Rückschluss darauf zulässt, aus welchem Quelle-Bereich und in welchen Ziel-Bereich sich ein Verkehrsteilnehmer bewegt hat. Eine solche Ermittlung des Ziel-Bereichs wird erst mit Abschluss der Bewegung des Verkehrsteilnehmers durchgeführt.

Mit Hilfe der Erfindung wird es nun möglich, auf Basis ohnehin vorhandener Bewegungsdaten aus Mobilfunkdaten neuartige Angaben zu generieren, die für die Verkehrsplanung von großer Bedeutung sind und dies automatisiert, auf verlässlicherer Datenbasis, in einem bisher nicht gekannten Umfang und mit deutlich verringertem Aufwand und dadurch entsprechend geringeren Kosten. Weiterhin können diese Quelle-Ziel-Nachfragedaten problemlos dynamisiert, d.h. nach Belieben nach verschiedenen Untersuchungskriterien aufgeschlüsselt werden. So ist beispielsweise eine Sortierung der Daten nach Abfahrtszeit, Ziel-Bereich und gar grob nach Fahrstrecken möglich.

Eine entsprechende Verkehrsnachfrage-Analyseeinheit umfasst mindestens:
- eine Eingangsschnittstelle für Mobilfunk-Signale, die die Bewegung von Mobilfunk-Endgeräten von einem Netz-Ortsbereich in einen anderen Netz-Ortsbereich eines Mobilfunk-Netzes repräsentieren,
- eine Quelle-/Ziel-Erfassungseinheit, die so ausgebildet ist, dass sie aus den Mobilfunk-Signalen, die sich auf von einzelnen Verkehrsteilnehmern mitgeführte Mobilfunk-Endgeräte beziehen, den Netz-Ortsbereich ableitet, der der Quelle-Bereich der Bewegung der jeweiligen Verkehrsteilnehmer ist, und dass sie aus den Mobilfunk-Signalen, die sich auf von einzelnen Verkehrsteilnehmern mitgeführte Mobilfunk-Endgeräte beziehen, den Netz-Ortsbereich ableitet, der der Ziel-Bereich der Bewegung der jeweiligen Verkehrsteilnehmer ist,
- eine Zähleinheit, die die Anzahl der Verkehrsteilnehmer ermittelt, die sich von einem bestimmten Quelle-Bereich in einen bestimmten Ziel-Bereich bewegt haben,
- eine Ausgangsschnittstelle zur Weiterleitung von Zähldaten der Zähleinheit.

Mit Hilfe der Quelle-/Ziel-Erfassungseinheit wird auf Basis der Bewegungsdaten, die aus den Mobilfunk-Signalen abgeleitet werden können, der Quelle-Bereich eines Verkehrsteilnehmers ermittelt und analog hierzu sein Ziel-Bereich. Die Anzahl der Verkehrsteilnehmer aus demselben Quelle-Bereich, die denselben Ziel-Bereich angefahren haben, wird durch die Zähleinheit ermittelt und über die Ausgangsschnittstelle beispielsweise an eine Visualisierungseinheit und/oder eine Speichereinheit weitergegeben.

All die beschriebenen Komponenten der Verkehrsnachfrage-Analyseeinheit können jeweils sowohl hardwaremäßig als auch in Form von miteinander gekoppelten Untereinheiten eines Prozessors, gegebenenfalls softwaregesteuert, ausgeführt sein. Software hat den Vorteil einer schnellen und kostengünstigen Realisierung. Daher wird zur Durchführung des erfindungsgemäßen Verfahrens bevorzugt ein Computerprogrammprodukt verwendet, welches direkt in eine Rechnereinrichtung ladbar ist, mit Programmcodemitteln, um alle Schritte eines wie eben beschriebenen Verfahrens auszuführen. Die Verkehrsnachfrage-Analyseeinheit kann weiterhin als Hardware- und/oder Software-Baustein einer derartigen Rechnereinrichtung ausgebildet sein. Die Eingangs- und die Ausgangsschnittstellen können auch als kombinierte Input/Output-Datenschnittstelle ausgebildet sein.

Weitere besonders vorteilhafte Ausgestaltungen und Weiterbildungen der Erfindung ergeben sich auch aus den abhängigen Ansprüchen sowie der nachfolgenden Beschreibung. Dabei kann die Verkehrsnachfrage-Analyseeinheit auch entsprechend den abhängigen Ansprüchen zum Verfahren weitergebildet sein.

Bevorzugt werden die Quelle-Ziel-Nachfragedaten im Rahmen der Erfindung als Quelle-Ziel-Matrix erfasst. Die Nachfragedaten werden also in mindestens zwei Dimensionen zueinander aufgetragen. Dabei werden beispielsweise über die Zeilen einer Tabelle die Quelle-Bereiche und über die Spalten der Tabelle die Ziel-Bereiche verzeichnet oder umgekehrt. In einer weiteren Dimension können zeitliche Verläufe hinterlegt werden. Eine absolute Quelle-Ziel-Matrix stellt Quelle-Ziel-Nachfragedaten dar, wobei ein Matrixeintrag die Verkehrsnachfrage von einer Quelle zu einem Ziel in der Einheit "Anzahl der Verkehrsteilnehmer" (pro Zeiteinheit) enthält. Alternativ lassen sich auch relative Matrizen definieren, wobei die Einträge in Prozent angegeben werden und ein Matrixeintrag den Prozentsatz derjenigen Verkehrsteilnehmer aus allen von einer Quelle startenden Verkehrsteilnehmern, die ein bestimmtes Ziel ansteuern.

Besonders vorteilhaft ist ein erfindungsgemäßes Verfahren dann ausgebildet, wenn die Bewegung des Verkehrsteilnehmers von einem Netz-Ortsbereich in einen anderen Netz-Ortsbereich automatisch auf Basis eines innerhalb des Mobilfunk-Netzes erzeugten Bereichswechselsignals detektiert wird. Beispielsweise wird bei dem weltweit derzeit gebräuchlichsten Mobilfunk-Standard, dem GSM-Standard automatisch ein sogenanntes "Location Area Update"-Signal dann generiert, wenn ein Mobilfunk-Endgerät von einem Ortsbereich, in diesem Beispiel einer "Location Area" des GSM-Netzes, in einen anderen Ortsbereich wechselt. Dies ist vorteilhafterweise auch dann möglich, wenn das Mobilfunk-Endgerät zum Zeitpunkt des Wechsels der Ortsbereiche nicht im aktiven Betrieb ist, d. h. in "Standby"-Funktion angeschaltet, aber nicht in ständigem Kommunikationsbetrieb wie etwa beim aktiven Telefonieren. Ähnliche Signale werden auch bei anderen Mobilfunk-Standards ausgesendet, wie zum Beispiel bei UMTS (Universal Mobile Telecommunications System). Bereichswechselsignale sind automatisch generierte Signale, die daher einen hohen Grad an Verlässlichkeit bieten und ohnehin in einem Mobilfunk-Netz generiert werden, so dass kein nennenswerter Zusatzaufwand zur Gewinnung von Bewegungsdaten der Verkehrsteilnehmer anfällt.

Vorteilhafterweise dienen daher insbesondere "Location Areas" im GSM-Netz oder analog definierte Ortsbereiche anderer Kommunikationsstandards als geographische Einheiten für die Bereiche, aus denen im Rahmen der Erfindung die Quelle- und Ziel-Bereiche ermittelt werden. "Location Areas" fassen in der Regel eine Gruppe von Funkzellen zusammen.

Die Definition eines bestimmten Netz-Ortsbereichs als Quelle-Bereich eines Verkehrsteilnehmers erfolgt bevorzugt dann, wenn sich das Mobilfunk-Endgerät des Verkehrsteilnehmers darin vor einem Wechsel des Netz-Ortsbereichs zunächst über einen vordefinierten Zeitraum befunden hat. Beispielsweise kann festgelegt werden, dass ein Netz-Ortsbereich dann als Quelle-Bereich gezählt wird, wenn das Mobilfunk-Endgerät über einen Zeitraum von mindestens einer Stunde in diesem Netz-Ortsbereich war. Damit wird eine Art Zähl-Schwellwert gesetzt, mit dessen Hilfe zwischen den Verkehrsteilnehmern unterschieden wird, die sich nur auf der Durchreise durch einen Netz-Ortsbereich befinden, und denen, für die dieser Netz-Ortsbereich der Ausgangsbereich für eine Ortsveränderung war.

Analog hierzu erfolgt die Definition eines bestimmten Netz-Ortsbereichs als Ziel-Bereich eines Verkehrsteilnehmers bevorzugt dann, wenn sich das Mobilfunk-Endgerät darin zunächst über einen vordefinierten Zeitraum befindet, der vorzugsweise die gleiche Größe hat wie der vordefinierte Zeitraum, der bei der Definition von Quelle-Bereichen herangezogen wird. Auch mit Hilfe dieser Methode wird im Verfahren zwischen solchen Verkehrsteilnehmern unterschieden, die im Netz-Ortsbereich auf der Durchreise sind und denen, für die dieser Netz-Ortsbereich den Zielbereich ihrer Ortsveränderung darstellt.

Eine geeignete Definition eines solchen vordefinierten Zeitraums zur Bestimmung des Quelle-Bereichs bzw. des Ziel-Bereichs kann mit Hilfe verschiedener alternativ oder komplementär nutzbarer Ansätze erfolgen:

Erstens kann der vordefinierte Zeitraum in Abhängigkeit von der Größe des Netz-Ortsbereichs festgelegt werden, in dem sich das Mobilfunk-Endgerät befindet. Diese Größe variiert lokal; beispielsweise sind "Location Areas" in Ballungsräumen kleinere räumliche Einheiten als im ländlichen Gebiet.

Ein Verkehrsteilnehmer braucht zur Durchquerung eines in seiner Ausdehnung im Vergleich zu einem ersten Netz-Ortsbereich doppelt so großen Netz-Ortsbereichs bei näherungsweise gleicher Verkehrslage in etwa doppelt so lange wie zur Durchquerung des ersten Netz-Ortsbereichs. Dieser Faktor wird bei der Definition des vordefinierten Zeitraums also mit berücksichtigt.

Zweitens kann der vordefinierte Zeitraum dynamisch in Abhängigkeit von der Tageszeit und/oder der Verkehrssituation festgelegt werden, in der sich der Verkehrsteilnehmer örtlich verändert. Diese Variante berücksichtigt also verkehrliche Einflussfaktoren auf die mögliche Durchquerungsdauer für einen Netz-Ortsbereich, zum Beispiel die geringe Durchschnittsgeschwindigkeit von Kfz während der Rush-Hour in Städten.

Drittens kann bei der Definition des vordefinierten Zeitraums die Fahrtzeit des Verkehrsteilnehmers mit berücksichtigt werden. Dies ist insbesondere dann sinnvoll, wenn Quelle-Ziel-Nachfragedaten für größere Bereiche erhoben werden, beispielsweise innerhalb Deutschlands. In diesem Fall ist es sinnvoll zu berücksichtigen, dass Verkehrsteilnehmer, speziell Autofahrer, gewisse Ruhezeiten einhalten werden oder gar müssen. Dieser Faktor wird vorzugsweise bei Fahrstrecken von über 100 km mit in Erwägung gezogen, denn sonst ergäbe sich beispielsweise das Bild, dass viele Ziel-Bereiche mitten in einem Gebiet liegen, das nur spärlich besiedelt ist, in dem jedoch ein Autobahn-Rastplatz liegt. Dagegen ist es mit Hilfe der Berücksichtigung des Faktors der Fahrtzeit möglich, solche Fehlerquellen weitestgehend zu eliminieren.

Mobilfunk-Netze werden von verschiedenen Betreibern unterhalten und können wie erwähnt auf unterschiedlichen Kommunikationsstandards basieren. Um diesen Faktoren Rechnung zu tragen, sieht eine bevorzugte Ausführungsform der Erfindung vor, dass die Anzahl der Verkehrsteilnehmer, die sich vom selben Quelle-Bereich in denselben Ziel-Bereich bewegt haben, getrennt für Netze unterschiedlicher Betreiber und/oder mit unterschiedlichen Kommunikationsstandards aufgeschlüsselt wird. Hierdurch kann in einem nächsten Schritt aus für ein oder mehrere Netze oder Kommunikationsstandards aufkumulierten Anzahlen von Verkehrsteilnehmern, die sich vom selben Quelle-Bereich in denselben Ziel-Bereich bewegt haben, auf die Gesamtanzahl aller Verkehrsteilnehmer hochgerechnet wird, die sich vom selben Quelle-Bereich in denselben Ziel-Bereich bewegt haben. Dadurch ergibt sich eine relativ genaue Abschätzung der Quelle-Ziel-Nachfragedaten der Gesamtheit der Verkehrsteilnehmer, die wiederum die entscheidende Basis ist für Verkehrsplanungs- und -steuerungsmaßnahmen.

Es kann beispielsweise eine Erhebung der Quelle-Ziel-Verkehre nur unter Zuhilfenahme der Mobilfunkdaten eines ersten und eines zweiten Betreibers von insgesamt sieben Betreibern erfolgen, von denen der eine nur 4% und der andere 17% Marktanteil hat. Eine derartige Penetrationsrate, die beispielsweise in Form von Erfahrungswerten vorliegen können, genügt vollkommen, um mit Hilfe weiterer statistischer Grunddaten die Quelle-Ziel-Verkehrsflüsse der Gesamtheit aller Verkehrsteilnehmer so genau ableiten zu können, dass die derzeit gültigen Genauigkeitsstandards bei weitem übertroffen werden.

Analog kann im Rahmen von Hochrechnungen mit Hilfe weiterer statistischer Zusatzangaben auch von einer Zahl von Verkehrsteilnehmern, die ein eingeschaltetes Mobilfunk-Endgerät mit sich führen, auf die Gesamtheit aller Verkehrsteilnehmer inklusive derer, die kein Mobilfunk-Endgerät besitzen oder ihr Mobilfunk-Endgerät nicht mitführen oder es nicht angeschaltet haben, geschlossen werden.

Ein erfindungsgemäßes Verfahren ist prinzipiell dazu geeignet, Verkehrsströme von Verkehrsteilnehmern abzubilden, unabhängig davon, mit welchem Verkehrsmittel sie sich bewegen. Bevorzugt werden die Quelle-Ziel-Nachfragedaten getrennt nach Verkehrsmitteln aufgeschlüsselt. Hierdurch ergibt sich insbesondere für die Auswertung der Quelle-Ziel-Nachfragedaten ein deutlich höherer Nutzwert. Beispielsweise ist es für die Verkehrsplanung für eine Stadtautobahn relativ irrelevant, wie viele Personen sich insgesamt innerhalb einer Stadt von einem Quelle-Bereich in einen Ziel-Bereich bewegen, sondern es interessiert die Planer in erster Linie, wie viele Personen hierzu ein Kraftfahrzeug verwenden.

Im Rahmen einer solchen Aufschlüsselung nach Verkehrsmitteln werden bevorzugt aus einer Analyse der Ortsveränderung eines einzelnen Mobilfunk-Endgeräts und/oder der Kommunikationsparameter eines einzelnen Mobilfunk-Endgeräts Rückschlüsse über das Verkehrsmittel gezogen, in dem das jeweilige Mobilfunk-Endgerät mitgeführt wird. Derartige Rückschlüsse können in Form einer Clusteranalyse beispielsweise wie folgt ausfallen: Bewegt sich ein erster Verkehrsteilnehmer über seine gesamte Reisestrecke kontinuierlich entlang von Netz-Ortsbereichen, durch die eine S-Bahnstrecke verläuft und sähe das typische Bewegungsmuster eines Autofahrers, der vom selben Quelle-Bereich zum selben Ziel-Bereich fährt, üblicherweise das Durchfahren anderer Netz-Ortsbereiche vor, so liegt der Schluss nahe, dass er sich in der S-Bahn befunden hat. Eine ähnliche Analyse ließe sich für die Bewegung von Radfahrern durchführen, die in erster Linie aufgrund ihrer vergleichsweise geringen Geschwindigkeit erkennbar sind. Eine Analyse in Abhängigkeit von Kommunikationsparametern kann beispielsweise bei U-Bahn-Fahrgästen erfolgen, wenn in U-Bahn-Tunnels andere Sende- und Empfangsstandards oder andersartige Sende- und Empfangsstationen oder andere Frequenzen verwendet werden als in oberirdischen Netzen. Die Liste solcher Analysekriterien und -methoden ist schon heute groß, und es ist zu erwarten, dass durch die Fortentwicklung der Mobilfunk-Technik, der Verkehrstechnik und statistischer Auswertemethoden noch viele weitere Kriterien hinzukommen werden, die derartige Analyseverfahren eher noch verfeinern werden.

Zusätzlich oder alternativ zu dieser Analysemethode werden Verkehrsteilnehmerstatistiken zur Unterstützung der Aufschlüsselung der Nachfragedaten nach Verkehrsmitteln verwendet. Sie bieten vorteilhafterweise eine empirische Absicherung für die Analysedaten und/oder können zudem einen einfachen Berechnungsschlüssel liefern, aufgrund dessen nach Verkehrsmitteln unterteilt werden kann.

Weiterhin sieht eine besonders bevorzugte Ausführungsform der Erfindung vor, dass von den Mobilfunk-Endgeräten Informationen über die Verkehrsmittel übermittelt werden, in denen sie sich befinden. Eine derartige Informations-Übermittlung kann entweder automatisiert erfolgen oder - bevorzugt - initiiert vom Benutzer des jeweiligen Mobilfunk-Endgeräts. Durch die Einbeziehung des Benutzers kann simultan vor Erfassung der Bewegung eines Mobilfunk-Endgeräts sein Einverständnis zu einer derartigen Erfassung bestätigt werden, wodurch Nutzer von Mobil-Endgeräten von einer unerwünschten Aufzeichnung ihrer Bewegungen geschützt werden können. Im Gegenzug kann ein Benutzer nach Weitergabe von Informationen über das Verkehrsmittel, das ihn befördert, und/oder nach Rückbestätigung seines Einverständnisses zur Erfassung seiner Bewegung verkehrsmittel- und/oder positionsspezifische Informationen zur Verfügung gestellt bekommen.

Zum Schutz der Bewegungsdaten von Benutzern vor der anderweitigen Nutzung durch Dritte ist es im Rahmen der Erfindung als besonders vorteilhaft anzusehen, wenn Identifikationsdaten des Mobilfunk-Endgeräts durch Anonymisierungsverfahren so chiffriert werden, dass eine Zuordnung der Daten zu personenbezogenen Daten einzelner Nutzer verhindert wird. So kann beispielsweise einem Mobilfunk-Endgerät ein Zufallscode für einen begrenzten Zeitraum, zum Beispiel für 24 Stunden, zugeordnet und danach wiederum nach einem Zufallsprinzip abgeändert werden.

Eine weitere besonders vorteilhafte Ausgestaltung der Erfindung besteht darin, dass die Ermittlung der Bewegung der Mobilfunk-Endgeräte in einem begrenzten Zeitraum durchgeführt wird. Beispielsweise können die Quelle-Ziel-Nachfragedaten durchgängig über mehrere Wochen erfasst werden oder der begrenzte Zeitraum ist eine verkehrsspezifisch definierte Tageszeit wie die Rush-Hour an Werktagen. Bevorzugt wird eine solche Ermittlung an einer Mehrzahl von Tagen durchgeführt, was unter anderem den Vorteil hat, dass für einen kritischen Zeitraum im Tagesverkehr empirische und belastbare Daten gesammelt und in mehreren Durchläufen überprüft werden können. Durch die automatisierte Gewinnung der Quelle-Ziel-Nachfragedaten ist es weiterhin möglich, eine Analyse in Echtzeit oder aufgeschlüsselt für geeignete Zeitscheiben durchzuführen, so dass sich selbst tages- oder stundenaktuelle Veränderungen abbilden lassen. Hieraus können fortgeschrittene Verkehrsmodelle erstellt werden, die sich automatisch an die jeweilige ermittelte Situation anpassen und auch für bislang nicht erfassbare Ausnahmezustände wie Straßensperrungen und anderweitige Störungen noch verwertbare Daten liefern.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
Figur 1 eine schematische Darstellung von Quelle-Ziel-Verkehren in einem Verkehrsbereich und hieraus abgeleitete absolute und relative Quelle-Ziel-Matrizen,
Figur 2 eine Überblicksdarstellung eines Verkehrsbereichs mit zwei Netz-Ortsbereichen,
Figur 3 eine detailliertere schematische Darstellung eines Verkehrsbereichs mit drei Netz-Ortsbereichen und verschiedenen Verkehrsmitteln,
Figur 4 eine Blockdarstellung eines Ausführungsbeispiels einer erfindungsgemäßen Verkehrsnachfrage-Analyseeinheit.

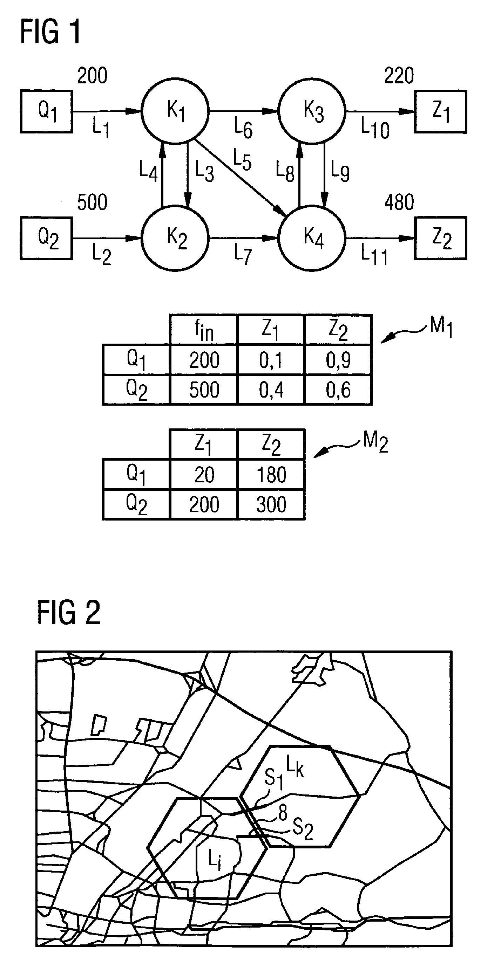

In Figur 1 ist schematisch der Verkehr von zwei Quelle-Bereichen Q₁, Q₂ in Richtung zweier Ziel-Bereiche Z₁, Z₂ dargestellt. Der Verkehr verläuft hier über vier Knotenpunkte K₁, K₂, K₃, K₄. Ein Verkehrsteilnehmer gelangt von dem ersten Quelle-Bereich Q₁ über eine erste Strecke L₁ zu einem ersten Knotenpunkt K₁ oder von dem zweiten Quelle-Bereich Q₂ über eine zweite Strecke L₂ zu einem zweiten Knotenpunkt K₂. Zwischen dem ersten und dem zweiten Knotenpunkt K₁, K₂ verlaufen weitere Verbindungsstrecken L₃, L₄, ebenso wie weitere Strecken L₅, L₆, L₇ von den ersten und zweiten Knotenpunkten K₁, K₂ zu dritten und vierten Knotenpunkten K₃, K₄. Diese beiden letztgenannten Knotenpunkte K₃, K₄ sind wiederum über Verbindungsstrecken L₈, L₉ miteinander verbunden. Vom dritten Knotenpunkt K₃ führt jedoch auch eine Ziel-Verbindungsstrecke L₁₀ zu einem ersten Ziel-Bereich Z₁ und vom vierten Knotenpunkt K₄ eine weitere Ziel-Verbindungsstrecke L₁₁ zu einem zweiten Ziel-Bereich Z₁.

Diese Schemadarstellung ist ein stark vereinfachtes Beispiel für verschiedene Quelle- und Ziel-Bereiche sowie deren Verbindungen. Selbstverständlich können beispielsweise auch die Knotenpunkte K₁, K₂, K₃, K₄ als Quelle-Bereiche und/oder Ziel-Bereiche angesehen werden, und in der Realität wird eine deutlich größere Vielzahl von derartigen Bereichen, Knoten und Verbindungen abgebildet werden.

In Figur 1 ist außerdem jeweils die Anzahl der Verkehrsteilnehmer angegeben, die von einem Quelle-Bereich Q₁, Q₂ losfährt und die an einem Ziel-Bereich Z₁, Z₂ ankommt. Vom ersten Quelle-Bereich Q₁ fahren 200 Verkehrsteilnehmer los, während vom zweiten Quelle-Bereich Q₂ aus 500 Verkehrsteilnehmer starten. Im ersten Ziel-Bereich Z₁ kommen 220 Verkehrsteilnehmer an, während im zweiten Ziel-Bereich Z₂ 480 Verkehrsteilnehmer ihre Fahrt beenden.

Diese Verkehrsbewegungen werden nun in Form zweier Quelle-Ziel-Matrizen M₁, M₂ aufbereitet. Die erste Quelle-Ziel-Matrix M₁ ist eine relative Matrix, in der über die in den Zeilen aufgelisteten Quelle-Bereiche Q₁, Q₂ in einer ersten Spalte (fᵢₙ) die Anzahl der vom jeweiligen Quelle- Bereich Q₁, Q₂ losfahrenden Verkehrsteilnehmer aufgetragen wird. In den Folgespalten werden dann die Prozentzahlen der Verkehrsteilnehmer angegeben, die von der Gesamtzahl der von einem Quelle-Bereich stammenden Verkehrsteilnehmer hin zu einem Ziel-Bereich Z₁, Z₂ fahren.

Analog hierzu sind in der zweiten Quelle-Ziel-Matrix M₂ statt der Prozentangaben absolute Zahlen aufgetragen. Aus beiden Matrizen M₁, M₂ ist jeweils ableitbar, dass vom ersten Quelle-Bereich Q₁ 20 Verkehrsteilnehmer in den ersten Ziel-Bereich Z₁ und 180 Verkehrsteilnehmer in den zweiten Ziel-Bereich Z₂ gefahren sind, während vom zweiten Quelle-Bereich Q₂ 200 Verkehrsteilnehmer in den ersten Ziel-Bereich Z₁ und 300 in den zweiten Ziel-Bereich Z₂ gelangten.

Derartige Quelle-Ziel-Matrizen sollen mit Hilfe des erfindungsgemäßen Verfahrens automatisiert oder teil-automatisiert erstellt werden.

Figur 2 zeigt überblicksmäßig einen Verkehrsbereich mit zahlreichen Straßenverbindungen. Als Beispiel sind hier zwei Netz-Ortsbereiche Lᵢ, Lₖ in Wabenform eingezeichnet. Derartige Netz-Ortsbereiche können auch andere Formen annehmen, üblicherweise sind sie eher kreisförmig um eine Sende- und Empfangseinrichtung angeordnet und überschneiden sich meist etwas. An der Grenze 8 zwischen den beiden Netz-Ortsbereichen Lᵢ, Lₖ verlaufen zwei Straßen mit zwei Übergangsstrecken S₁, S₂. Wenn ein Mobilfunk-Endgerät, das in einem Fahrzeug liegt, auf einer dieser Übergangsstrecken S₁, S₂ die Grenze zwischen den Netz-Ortsbereichen Lᵢ, Lₖ überschreitet, wird automatisch ein Bereichswechselsignal - bei GSM-Netzen in Form eines Location Area Updates - generiert und zentral von einer Zentrale im Mobilfunk-Netz erfasst. Für die Erfindung kann dieses Signal dazu genutzt werden, den Übergang des Mobilfunk-Endgeräts - und damit eines Verkehrsteilnehmers - von einem Netz-Ortsbereich Lᵢ, Lₖ in einen anderen zu registrieren und an eine erfindungsgemäße Verkehrsnachfragedaten-Analyseeinheit zu Auswertung weiterzuleiten.

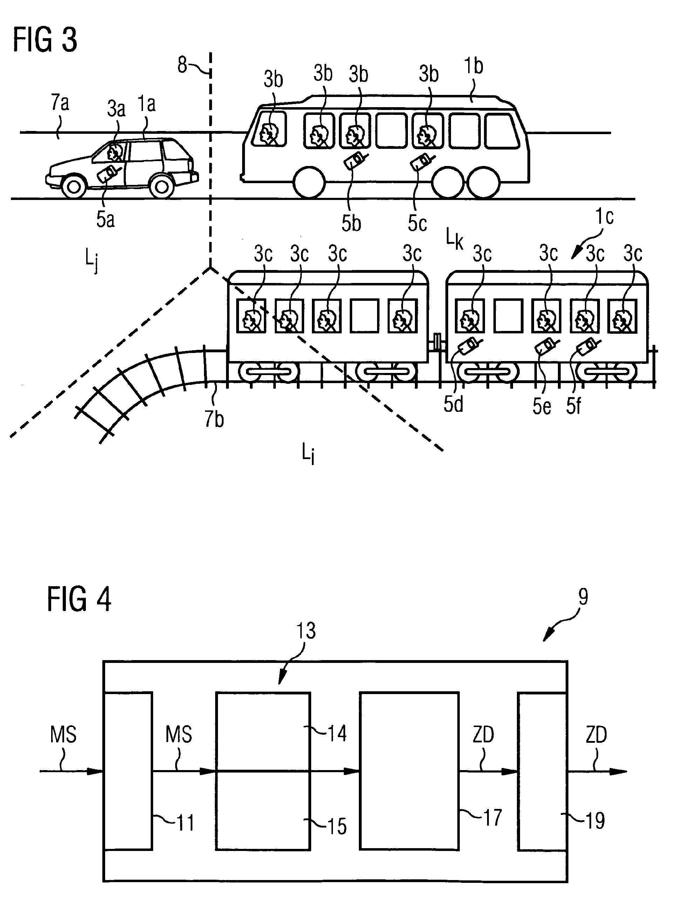

In Figur 3 sind solche Übergänge im Detail dargestellt. Drei Fahrzeuge 1a, 1b, 1c, hier ein Kfz 1a, ein Bus 1b und ein Zug 1c, befördern Verkehrsteilnehmer 3a, 3b, 3c, wobei sich mehrere Verkehrsteilnehmer 3b im Bus 1b befinden und mehrere Verkehrsteilnehmer 3c im Zug 1c. Der Verkehrsteilnehmer 3a im Kfz 1a führt ein Mobilfunk-Endgerät 5a mit sich und zwei Verkehrsteilnehmer 3b im Bus 1b führen ebenfalls Mobilfunk-Endgeräte 5b, 5c mit sich. Ebensolches gilt für Verkehrsteilnehmer 3c, die sich in einem Abteil des Zuges 1c befinden, in dem das Telefonieren mit Mobiltelefonen erlaubt ist. Sie führen Mobilfunk-Endgeräte 5d, 5e, 5f mit sich. Alle drei Fahrzeuge 1a, 1b, 1c bewegen sich im Bild in einer Richtung von rechts nach links, allerdings das Kfz 1a und der Bus 1b auf einer Straße 7a und der Zug 1c auf einem Schienenstrang 7b. Der Bus 1b befindet sich in einem ersten Netz-Ortsbereich Lₖ, während das Kfz 1a bereits in einem zweiten Netz-Ortsbereich Lⱼ fährt. Der Zug 1c bewegt sich soeben vom ersten Netz-Ortsbereich Lₖ in einen dritten Netz-Ortsbereich Lᵢ. Überschreitet ein Mobilfunk-Endgerät 5a, 5b, 5c, 5d, 5e, 5f die Grenze 8 zwischen zwei Netz-Ortsbereichen Lᵢ, Lⱼ, Lₖ, so wird ein Bereichswechselsignal generiert, mit Hilfe dessen die Ortsveränderung des Mobilfunk-Endgeräts 5a, 5b, 5c, 5d, 5e, 5f auf jeden Fall erfassbar wird, auch wenn sein Benutzer es in diesem Moment nicht aktiv benutzt, also beispielsweise mit seinem Mobiltelefon telefoniert.

Je nach Verkehrsmittel 1a, 1b, 1c ergeben sich verschiedene Bewegungsmuster. Während der Verkehrsteilnehmer 3a im Kfz 1a im Wesentlichen frei in der Streckenwahl ist (lediglich gebunden an Straßenverläufe), folgt der Bus 1b, wenn es sich um einen Linienbus handelt, einem deutlich festeren Schema. Der Zug 1c hingegen ist durch den Schienenverlauf und durch Weichenstellungen in seiner Fahrtstrecke im Wesentlichen von außen festgelegt. Insofern ist es bei der Auswertung der Bewegungsdaten auch möglich, auf Basis der Bewegungsmuster festzustellen, in welchem Fahrzeug 1a, 1b, 1c sich ein Verkehrsteilnehmer 3a, 3b, 3c befunden hat.

In einem erfindungsgemäßen Verfahren werden nun auf Basis der aus den Mobilfunkdaten abgeleiteten Bewegungsdaten und der geographischen Gliederung durch die Netz-Ortsbereiche Lᵢ, Lⱼ, Lₖ schematisierte Bewegungsmuster erfasst. Zusätzlich hierzu wird mit einer Logik erfaßt, ob ein Netz-Ortsbereich Lᵢ, Lⱼ, Lₖ ein Quelle-, ein Ziel- oder ein Durchfahrts-Bereich des Verkehrsteilnehmers 3a, 3b, 3c ist. Dies geschieht vorzugsweise dadurch, dass eruiert wird, ob sich das Mobilfunk-Endgerät 5a, 5b, 5c, 5d, 5e, 5f über längere Zeit in einem Netz-Ortsbereich Lᵢ, Lⱼ, Lₖ befunden hat und ob davor oder danach eine Bewegung feststellbar war. Ist eine Bewegung danach feststellbar, so wird der Netz-Ortsbereich Lᵢ, Lⱼ, Lₖ, in dem sich das Mobilfunk-Endgerät 5a, 5b, 5c, 5d, 5e, 5f davor längere Zeit befunden hat, als Quelle-Bereich Q₁, Q₂ angesehen. Ist nur eine Bewegung davor feststellbar und befindet sich ein Mobilfunk-Endgerät 5a, 5b, 5c, 5d, 5e, 5f dann über eine längere Zeit nur in einem Netz-Ortsbereich Lᵢ, Lⱼ, Lₖ, so wird dieser als Ziel-Bereich Z₁, Z₂ angesehen. Alle Verkehrsteilnehmer 3a, 3b, 3c, die sich aufgrund dieser Analyse von ein und demselben Quelle-Bereich Q₁, Q₂ in denselben Ziel-Bereich Z₁, Z₂ bewegt haben, werden schließlich zusammengezählt, woraus sich eine Quelle-Ziel-Matrix M₁, M₂ ergibt, wie in Figur 1 dargestellt.

Figur 4 zeigt ein einfaches Beispiel für eine erfindungsgemäße Verkehrsnachfrage-Analyseeinheit 9. Sie ist hier als Software innerhalb eines Rechnermoduls realisiert und weist neben einer Eingangsschnittstelle 11 und einer Ausgangsschnittstelle 19 eine Quelle-/Ziel-Erfassungseinheit 13 und eine Zähleinheit 17 auf. Die Quelle-/Ziel-Erfassungseinheit ist logisch nochmals in eine Quelle- Erfassungseinheit 14 und eine Ziel-Erfassungseinheit 15 unterteilbar.

In die Verkehrsnachfrage-Analyseeinheit 9 gelangen über die Eingangsschnittstelle 11 Mobilfunk-Signale MS, hier in Form von Bereichswechselsignalen, beispielsweise Location Area Updates, die die Bewegung von Mobilfunk-Endgeräten 5a, 5b, 5c, 5d, 5e, 5f von einem Netz-Ortsbereich Lᵢ, Lⱼ, Lₖ eines Mobilfunk-Netzes in einen anderen repräsentieren (siehe Figur 3). Aus diesen Mobilfunk-Signalen MS leitet die Quelle-/Ziel-Erfassungseinheit 13 für Verkehrsteilnehmer 3a, 3b, 3c, d. h. für Benutzer der Mobilfunk-Endgeräte 5a, 5b, 5c, 5d, 5e, 5f, die diese in ihrem Fahrzeug 1a, 1b, 1c mitführen, den Netz-Ortsbereich Lᵢ, Lⱼ, Lₖ ab, der der Quelle-Bereich Q₁, Q₂ ihrer Bewegung war und den Netz-Ortsbereich Lᵢ, Lⱼ, Lₖ, der der Ziel-Bereich Z₁, Z₂ ihrer Bewegung ist. In der Zähleinheit 17 wird schließlich die Anzahl all derer Verkehrsteilnehmer 3a, 3b, 3c ermittelt, die sich von demselben Quelle-Bereich Q1, Q2 in denselben Ziel-Bereich Z1, Z2 bewegt haben. Die so generierten Zähldaten ZD werden über die Ausgangsschnittstelle 19 an weitere Verarbeitungsmodule wie Rechnereinheiten Visualisierungsvorrichtungen (Drucker, Monitore o.ä.) und/oder an Speichermodule weitergegeben.

Es wird abschließend noch einmal darauf hingewiesen, dass es sich bei dem vorhergehend detailliert beschriebenen Verfahren sowie bei den dargestellten Ermittlungs- bzw. Verkehrssteuerungssystemen lediglich um Ausführungsbeispiele handelt, welche vom Fachmann in verschiedenster Weise modifiziert werden können, ohne den Bereich der Erfindung zu verlassen.

## Patentansprüche

1. Verfahren zur Bestimmung von Quelle-Ziel-Nachfragedaten von Verkehrsflüssen einer Mehrzahl von Verkehrsteilnehmern (3a, 3b, 3c) von definierten geografischen Quelle-Bereichen (Q₁, Q₂) zu definierten geografischen Ziel-Bereichen (Z₁, Z₂), bei dem jeweils die Bewegung eines einzelnen Verkehrsteilnehmers (3a, 3b, 3c) von einem Quelle-Bereich (Q₁, Q₂) in einen Ziel-Bereich (Z₁, Z₂) mit Hilfe einer Mobilfunk-Signalisierung erfasst wird, die sich auf ein von dem einzelnen Verkehrsteilnehmer (3a, 3b, 3c) mitgeführtes Mobilfunk-Endgerät (5a, 5b, 5c, 5d, 5e, 5f) bezieht, wobei Quelle-Bereich (Q₁, Q₂) und Ziel-Bereich (Z₁, Z₂) auf Basis von vorgegebenen Netz-Ortsbereichen (Lᵢ, Lⱼ, Lₖ) eines Mobilfunk-Netzes definiert sind, und jeweils die Anzahl der Verkehrsteilnehmer (3a, 3b, 3c), die sich vom selben Quelle-Bereich (Q₁, Q₂) in den selben Ziel-Bereich (Z₁ Z₂) bewegt haben, ermittelt wird, **dadurch gekennzeichnet, dass** ein Netz-Ortsbereich (Lᵢ, Lⱼ, Lₖ) dann als Quelle-Bereich (Q₁, Q₂) bzw. als Ziel-Bereich (Z₁, Z₂) eines Verkehrsteilnehmers (3a, 3b, 3c) definiert wird, wenn sich das Mobilfunk-Endgerät (5a, 5b, 5c, 5d, 5e, 5f) des Verkehrsteilnehmers (3a, 3b, 3c) darin vor bzw. nach einem Wechsel des Netz-Ortsbereichs (Lᵢ, Lⱼ, Lₖ) zunächst über einen vordefinierten Zeitraum befunden hat, wobei der vordefinierte Zeitraum in Abhängigkeit von der Größe des Netz-Ortsbereichs (Lᵢ, Lⱼ, Lₖ) festgelegt wird, in dem sich das Mobilfunk-Endgerät (5a, 5b, 5c, 5d, 5e, 5f) befindet.

2. Verfahren gemäß Anspruch 1,
**dadurch gekennzeichnet, dass** die Quelle-Ziel-Nachfragedaten als Quelle-Ziel-Matrix (M₁, M₂) erfasst werden.

3. Verfahren gemäß Anspruch 1 oder 2,
**dadurch gekennzeichnet, dass** die Bewegung des Verkehrsteilnehmers (3a, 3b, 3c) von einem Netz-Ortsbereich (Lᵢ, Lⱼ, Lₖ) in einen anderen Netz-Ortsbereich (Lᵢ, Lⱼ, Lₖ) automatisch auf Basis eines innerhalb des Mobilfunk-Netzes erzeugten Bereichswechselsignals detektiert wird.

4. Verfahren gemäß einem der Ansprüche 1 bis 3,
**dadurch gekennzeichnet, dass** der vordefinierte Zeitraum dynamisch in Abhängigkeit von der Tageszeit und/oder der Verkehrssituation festgelegt wird, in der sich der Verkehrsteilnehmer (3a, 3b, 3c) örtlich verändert.

5. Verfahren gemäß einem der Ansprüche 1 bis 4,
**dadurch gekennzeichnet, dass** bei der Definition des vordefinierten Zeitraums die Fahrtzeit des Verkehrsteilnehmers (3a, 3b, 3c) mit berücksichtigt wird.

6. Verfahren gemäß einem der vorhergehenden Ansprüche,
**dadurch gekennzeichnet, dass** die Anzahl der Verkehrsteilnehmer (3a, 3b, 3c)., die sich vom selben Quelle-Bereich (Q₁, Q₂) in den selben Ziel-Bereich (Z₁, Z₂) bewegt haben, getrennt für Netze unterschiedlicher Betreiber und/oder mit unterschiedlichen Kommunikationsstandards aufgeschlüsselt wird.

7. Verfahren gemäß Anspruch 6,
**dadurch gekennzeichnet, dass** aus für ein oder mehrere Netze aufkumulierten Anzahlen von Verkehrsteilnehmern (3a, 3b, 3c), die sich vom selben Quelle-Bereich (Q₁, Q₂) in denselben Ziel-Bereich (Z₁, Z₂) bewegt haben, auf die Gesamtanzahl aller Verkehrsteilnehmer hochgerechnet wird, die sich vom selben Quelle-Bereich (Q₁, Q₂) in denselben Ziel-Bereich (Z₁, Z₂) bewegt haben.

8. Verfahren gemäß einem der vorhergehenden Ansprüche,
**dadurch gekennzeichnet, dass** die Quelle-Ziel-Nachfragedaten getrennt nach Verkehrsmitteln (1a, 1b, 1c) aufgeschlüsselt werden.

9. Verfahren gemäß Anspruch 8,
**dadurch gekennzeichnet, dass** aus einer Analyse der Ortsveränderung eines einzelnen Mobilfunk-Endgeräts (5a, 5b, 5c, 5d, 5e, 5f) und/oder der Kommunikationsparameter eines einzelnen Mobilfunk-Endgeräts (5a, 5b, 5c, 5d, 5e, 5f) Rückschlüsse über das Verkehrsmittel (1a, 1b, 1c) gezogen werden, indem das jeweilige Mobilfunk-Endgerät (5a, 5b, 5c, 5d, 5e, 5f) mitgeführt wird.

10. Verfahren gemäß Anspruch 8 oder 9,
**dadurch gekennzeichnet, dass** Verkehrsteilnehmerstatistiken zur Unterstützung der Aufschlüsselung der Nachfragedaten nach Verkehrsmitteln (1a, 1b, 1c) verwendet werden.

11. Verfahren gemäß einem der Ansprüche 8 bis 10,
**dadurch gekennzeichnet, dass** von den Mobilfunk-Endgeräten (5a, 5b, 5c, 5d, 5e, 5f) Informationen über die Verkehrsmittel (1a, 1b, 1c) übermittelt werden, in denen sie sich befinden.

12. Verfahren gemäß einem der vorhergehenden Ansprüche,
**dadurch gekennzeichnet, dass** Identifikationsdaten des Mobilfunk-Endgeräts (5a, 5b, 5c, 5d, 5e, 5f) durch Anonymisierungsverfahren so chiffriert werden, dass eine Zuordnung der Daten zu personenbezogenen Daten einzelner Nutzer verhindert ist.

13. Verfahren gemäß einem der vorhergehenden Ansprüche,
**dadurch gekennzeichnet, dass** die Ermittlung der Bewegung der Mobilfunk-Endgeräte (5a, 5b, 5c, 5d, 5e, 5f) in einem begrenzten Zeitraum durchgeführt wird.

14. Verkehrsnachfrage-Analyseeinheit (9) zur Bestimmung von Quelle-Ziel-Nachfragedaten (M₁, M₂) von Verkehrsflüssen einer Mehrzahl von Verkehrsteilnehmern (3a, 3b, 3c) von definierten geografischen Quelle-Bereichen (Q₁, Q₂) zu definierten geografischen Ziel-Bereichen (Z₁, Z₂), mindestens umfassend:
- eine Eingangsschnittstelle (11) für Mobilfunk-Signale (MS), die die Bewegung von Mobilfunk-Endgeräten (5a, 5b, 5c, 5d, 5e, 5f) von einem Netz-Ortsbereich (Lᵢ, Lⱼ, Lₖ) in einen anderen Netz-Ortsbereich (Lᵢ, Lⱼ, Lₖ) eines Mobilfunk-Netzes repräsentieren,
- eine Quelle-/Ziel-Erfassungseinheit (13), die so ausgebildet ist, dass sie aus den Mobilfunk-Signalen, die sich auf von einzelnen Verkehrsteilnehmern (3a, 3b, 3c) mitgeführte Mobilfunk-Endgeräte (5a, 5b, 5c, 5d, 5e, 5f) beziehen, den Netz-Ortsbereich (Lᵢ, Lⱼ, Lₖ) ableitet, der der Quelle-Bereich (Q₁, Q₂) der Bewegung der jeweiligen Verkehrsteilnehmer (3a, 3b, 3c) ist, und dass sie aus den Mobilfunk-Signalen, die sich auf von einzelnen Verkehrsteilnehmern (3a, 3b, 3c) mitgeführte Mobilfunk-Endgeräte (5a, 5b, 5c, 5d, 5e, 5f) beziehen, den Netz-Ortsbereich (Lᵢ, Lⱼ, Lₖ) ableitet, der der Ziel-Bereich (Z₁, Z₂) der Bewegung der jeweiligen Verkehrsteilnehmer (3a, 3b, 3c) ist,
- eine Zähleinheit (17), die die Anzahl der Verkehrsteilnehmer (3a, 3b, 3c) ermittelt, die sich von einem bestimmten Quelle-Bereich (Q₁, Q₂) in einen bestimmten Ziel-Bereich (Z₁, Z₂) bewegt haben,
- eine Ausgangsschnittstelle (19) zur Weiterleitung von Zähldaten (ZD) der Zähleinheit (17),
- wobei die Verkehrsnachfrage-Analyseeinheit (9) dazu ausgebildet ist, einen Netz-Ortsbereich (Lᵢ, Lⱼ, Lₖ) dann als Quelle-Bereich (Q₁, Q₂) bzw. als Ziel-Bereich (Z₁, Z₂) eines Verkehrsteilnehmers (3a, 3b, 3c) zu definieren, wenn sich das Mobilfunk-Endgerät (5a, 5b, 5c, 5d, 5e, 5f) des Verkehrsteilnehmers (3a, 3b, 3c) darin vor bzw. nach einem Wechsel des Netz-Ortsbereichs (Lᵢ, Lⱼ, Lₖ) zunächst über einen vordefinierten Zeitraum befunden hat, wobei der vordefinierte Zeitraum in Abhängigkeit von der Größe des Netz-Ortsbereichs (Lᵢ, Lⱼ, Lₖ) festgelegt wird, in dem sich das Mobilfunk-Endgerät (5a, 5b, 5c, 5d, 5e, 5f) befindet.

## Claims

1. Method for determining source-destination request data from traffic flows for a plurality of road users (3a, 3b, 3c) from defined geographical source areas (Q₁, Q₂) to defined geographical destination areas (Z₁, Z₂), in which the respective movement of an individual road user (3a, 3b, 3c) from a source area (Q₁, Q₂) to a destination area (Z₁, Z₂) is captured by means of mobile radio signalling which relates to a mobile radio terminal (5a, 5b, 5c, 5d, 5e, 5f) carried by the individual road user (3a, 3b, 3c), wherein the source area (Q₁, Q₂) and the destination area (Z₁, Z₂) are defined on the basis of prescribed network local areas (Lᵢ, Lⱼ, Lₖ) in a mobile radio network, and the respective number of road users (3a, 3b, 3c) which have moved from the same source area (Q₁, Q₂) to the same destination area (Z₁, Z₂) is ascertained, **characterized in that** a network local area (Lᵢ, Lⱼ, Lₖ) is defined as source area (Q₁, Q₂) or as destination area (Z₁, Z₂) for a road user (3a, 3b, 3c) when the mobile radio terminal (5a, 5b, 5c, 5d, 5e, 5f) of the road user (3a, 3b, 3c) has been situated therein before or after a change of network local area (Lᵢ, Lⱼ, Lₖ) initially over a predefined period, wherein the predefined period is stipulated on the basis of the size of the network local area (Lᵢ, Lⱼ, Lₖ) which contains the mobile radio terminal (5a, 5b, 5c, 5d, 5e, 5f).

2. Method according to Claim 1,
**characterized in that** the source-destination request data are captured as a source-destination matrix (M₁, M₂).

3. Method according to Claim 1 or 2,
**characterized in that** the movement of the road user (3a, 3b, 3c) from one network local area (Lᵢ, Lⱼ, Lₖ) to another network local area (Lᵢ, Lⱼ, Lₖ) is detected automatically on the basis of an area change signal which is produced within the mobile radio network.

4. Method according to one of Claims 1 to 3,
**characterized in that** the predefined period is stipulated dynamically on the basis of the time of day and/or the traffic situation in which the road user (3a, 3b, 3c) changes location.

5. Method according to one of Claims 1 to 4,
**characterized in that** the definition of the predefined period also takes account of the journey time of the road user (3a, 3b, 3c).

6. Method according to one of the preceding claims,
**characterized in that** the number of road users (3a, 3b, 3c) who have moved from the same source area (Q₁, Q₂) to the same destination area (Z₁, Z₂) is broken down discretely for networks of different operators and/or with different communication standards.

7. Method according to Claim 6,
**characterized in that** numbers - accumulated for one or more networks - of road users (3a, 3b, 3c) who have moved from the same source area (Q₁, Q₂) to the same destination area (Z₁, Z₂) are projected for the total number of all road users who have moved from the same source area (Q₁, Q₂) to the same destination area (Z₁, Z₂).

8. Method according to one of the preceding claims,
**characterized in that** the source-destination request data are broken down discretely according to means of transport (1a, 1b, 1c).

9. Method according to Claim 8,
**characterized in that** an analysis of the local change in an individual mobile radio terminal (5a, 5b, 5c, 5d, 5e, 5f) and/or of the communication parameters of an individual mobile radio terminal (5a, 5b, 5c, 5d, 5e, 5f) is used to draw conclusions about the means of transport (1a, 1b, 1c) in which the respective mobile radio terminal (5a, 5b, 5c, 5d, 5e, 5f) is carried.

10. Method according to Claim 8 or 9,
**characterized in that** road user statistics are used to assist the breakdown of the request data according to means of transport (1a, 1b, 1c).

11. Method according to one of Claims 8 to 10,
**characterized in that** the mobile radio terminals (5a, 5b, 5c, 5d, 5e, 5f) transmit information about the means of transport (1a, 1b, 1c) which contain them.

12. Method according to one of the preceding claims,
**characterized in that** identification data for the mobile radio terminal (5a, 5b, 5c, 5d, 5e, 5f) are enciphered by anonymization methods such that association of the data with personal data of individual users is prevented.

13. Method according to one of the preceding claims,
**characterized in that** the movement of the mobile radio terminals (5a, 5b, 5c, 5d, 5e, 5f) is ascertained in a limited period.

14. Traffic request analysis unit (9) for determining source-destination request data (M₁, M₂) from traffic flows for a plurality of road users (3a, 3b, 3c) from defined geographical source areas (Q₁, Q₂) to defined geographical destination areas (Z₁, Z₂), at least comprising:
- an input interface (11) for mobile radio signals (MS) which represent the movement of mobile radio terminals (5a, 5b, 5c, 5d, 5e, 5f) from one network local area (Lᵢ, Lⱼ, Lₖ) to another network local area (Lᵢ, Lⱼ, Lₖ) in a mobile radio network,
- a source/destination capture unit (13) which is designed such that it takes the mobile radio signals which relate to mobile radio terminals (5a, 5b, 5c, 5d, 5e, 5f) carried by individual road users (3a, 3b, 3c) and derives the network local area (Lᵢ, Lⱼ, Lₖ) which is the source area (Q₁, Q₂) for the movement of the respective road users (3a, 3b, 3c), and in that it takes the mobile radio signals which relate to mobile radio terminals (5a, 5b, 5c, 5d, 5e, 5f) carried by individual road users (3a, 3b, 3c) and derives the network local area (Lᵢ, Lⱼ, Lₖ) which is the destination area (Z₁, Z₂) for the movement of the respective road users (3a, 3b, 3c),
- a counting unit (17) which ascertains the number of road users (3a, 3b, 3c) who have moved from a particular source area (Q₁, Q₂) to a particular destination area (Z₁, Z₂),
- an output interface (19) for forwarding counting data (ZD) from the counting unit (17),
- wherein the traffic request analysis unit (9) is designed to define a network local area (Lᵢ, Lⱼ, Lₖ) as source area (Q₁, Q₂) or as destination area (Z₁, Z₂) for a road user (3a, 3b, 3c) when the mobile radio terminal (5a, 5b, 5c, 5d, 5e, 5f) of the road user (3a, 3b, 3c) has been situated therein before or after a change of network local area (Lᵢ, Lⱼ, Lₖ) initially over a predefined period, wherein the predefined period is stipulated on the basis of the size of the network local area (Lᵢ, Lⱼ, Lₖ) which contains the mobile radio terminal (5a, 5b, 5c, 5d, 5e, 5f).

## Revendications

1. Procédé de détermination de données de demande origine-destination de flux de circulation d'une multiplicité de participants ( 3a, 3b, 3c ) à la circulation, de zones ( Q1, Q2 ) d'origine géographiques définies à des zones ( Z1, Z2 ) de destination géographiques définies, dans lequel on détecte respectivement le déplacement d'un participant ( 3a, 3b, 3c ) individuel à la circulation, d'une zone ( Q1, Q2 ) d'origine à une zone ( Z1, Z2 ) de destination, à l'aide d'une signalisation par téléphone mobile qui se rapporte à un terminal ( 5a, 5b, 5c, 5d, 5e, 5f ) de téléphone mobile emporté par le participant ( 3a, 3b, 3c ) individuel à la circulation, la zone ( Q1, Q2 ) d'origine et la zone ( Z1, Z2 ) de destination étant définies sur la base de zones ( Li, Lj, Lk ) locales de réseau prescrites d'un réseau de téléphone mobile, et respectivement le nombre des participants ( 3a, 3b, 3c ) à la circulation qui se déplacent de la même zone ( Q1, Q2 ) d'origine à la même zone ( Z1, Z2 ) de destination, étant déterminé, **caractérisé en ce que** l'on définit une zone ( Li, Lj, Lk ) locale de réseau comme zone ( Q1, Q2 ) d'origine ou comme zone ( Z1, Z2 ) de destination d'un participant ( 3a, 3b, 3c ) à la circulation, lorsque le terminal ( 5a, 5b, 5c, 5d, 5e, 5f ) de téléphone mobile du participant ( 3a, 3b, 3c ) à la circulation s'y est trouvé d'abord, pendant un laps de temps défini à l'avance, avant ou après un changement de la zone ( Li, Lj, Lk ) locale de réseau, le laps de temps défini à l'avance étant fixé en fonction de la dimension de la zone ( Li, Lj, Lk ) locale de réseau, dans lequel se trouve le terminal ( 5a, 5b, 5c, 5d, 5e, 5f ) de téléphone immobile.

2. Procédé suivant la revendication 1, **caractérisé en ce qu'**on détecte les données de demande d'origine-destination sous la forme d'une matrice ( M1, M2 ) origne-destination.

3. Procédé suivant la revendication 1 ou 2, **caractérisé en ce qu'**on détecte automatiquement, sur la base d'un signal de changement de zone produit dans le réseau de téléphone immobile, les déplacements des participants ( 3a, 3b, 3c ) à la circulation, d'une zone ( Li, Lj, Lk ) locale de réseau à une autre zone ( Li, Lj, Lk ) locale de réseau.

4. Procédé suivant l'une des revendications 1 à 3, **caractérisé en ce que** l'on fixe dynamiquement le laps de temps défini à l'avance, en fonction de l'heure, du jour et/ou de la situation de la circulation change, dans laquelle le participant ( 3a, 3b, 3c ) à la circulation se modifie localement.

5. Procédé suivant l'une des revendications 1 à 4, **caractérisé en ce que**, lors de la définition du laps de temps défini à l'avance, on tient compte de la durée du trajet du participant ( 3a, 3b, 3c ) à la circulation.

6. Procédé suivant l'une des revendications précédentes, **caractérisé en ce que** le nombre des participants ( 3a, 3b, 3c ) à la circulation qui se sont déplacés de la même zone ( Q1, Q2 ) d'origine à la même zone ( Z1, Z2 ) de destination est déduit séparément pour des réseaux d'exploitants différents et/ou ayant des normes de communication différentes.

7. Procédé suivant la revendication 6, **caractérisé en ce qu'**à partir des nombres cumulés pour un ou pour plusieurs réseaux de participants ( 3a, 3b, 3c ) à la circulation qui se sont déplacés de la même zone ( Q1, Q2 ) d'origine à la même zone ( Z1, Z2 ) de destination, on extrapole le nombre total de tous les participants à la circulation qui se sont déplacés de la même zone ( Q1, Q2 ) d'origine à la même zone ( Z1, Z2 ) de destination.

8. Procédé suivant l'une des revendications précédentes, **caractérisé en ce que** l'on déduit les données de demande d'origine-destination séparément suivant les moyens ( 1a, 1b, 1c ) de circulation.

9. Procédé suivant la revendication 8, **caractérisé en ce qu'**à partir d'une analyse de la modification locale d'un terminal ( 5a, 5b, 5c, 5d, 5e, 5f ) de téléphone mobile et/ou des paramètres de communication d'un terminal ( 5a, 5b, 5c, 5d, 5e, 5f ) de téléphone mobile, on tire des conclusions sur le moyen ( 1a, 1b, 1c ) de circulation sur lequel le terminal ( 5a, 5b, 5c, 5d, 5e, 5f ) de téléphone mobile respectif est emporté.

10. Procédé suivant la revendication 8 ou 9, **caractérisé en ce que** l'on utilise des statistiques de participant à la circulation pour faciliter l'exposé en détail des données de demande suivant les moyens ( 1a, 1b, 1c ) de circulation.

11. Procédé suivant l'une des revendications 8 à 10, **caractérisé en ce que** l'on transmet par les terminaux ( 5a, 5b, 5c, 5d, 5e, 5f ) de téléphone mobile des informations sur les moyens ( 1a, 1b, 1c ) de circulation dans lesquels ils se trouvent.

12. Procédé suivant l'une des revendications précédentes, **caractérisé en ce que** l'on chiffre des données d'identification du terminal ( 5a, 5b, 5c, 5d, 5e, 5f ) de téléphone mobile par un procédé d'anonymisation de manière à empêcher une affectation des données à des données, se rapportant à la personne à des utilisateurs individuels.

13. Procédé suivant l'une des revendications précédentes, **caractérisé en ce que** l'on effectue la détermination des déplacements des terminaux ( 5a, 5b, 5c, 5d, 5e, 5f ) de téléphone mobile dans un laps de temps limité.

14. Unité ( 9 ) d'analyse de demande de trafic pour la détermination de données ( M1, M2 ) de circulation origine-destination de flux de circulation d'une multiplicité de participants ( 3a, 3b, 3c ) à la circulation de zones ( Q1, Q2 ) d'origine géographiques définies à des zones ( Z1, Z2 ) de destination géographiques définies, comprenant au moines :
- une interface ( 11 ) d'entrée pour des signaux ( MS ) de téléphone mobile, qui représentent le déplacement de terminaux ( 5a, 5b, 5c, 5d, 5e, 5f ) de téléphone mobile, d'une zone ( Li, Lj, Lk ) locale de réseau à une autre zone ( Li, Lj, Lk ) locale de réseau, d'un réseau de téléphones immobiles,
- une unité ( 13 ) de détection d'origine/destination, qui est telle qu'à partir des signaux de téléphone mobile, qui se rapportent à des terminaux ( 5a, 5b, 5c, 5d, 5e, 5f ) de téléphone mobile emportés par des participants ( 3a, 3b, 3c ) individuels à la circulation, elle déduit la zone ( Li, Lj, Lk ) locale du réseau qui est la zone de source ( Q1, Q2 ) du déplacement du participant ( 3a, 3b, 3c ) respectif à la circulation et en ce qu'à partir des signaux de téléphone mobile qui se rapportent à des terminaux ( 5a, 5b, 5c, 5d, 5e, 5f ) de téléphone mobile emportés par des participants ( 3a, 3b, 3c ) à la circulation, elle déduit la zone ( Lᵢ, Lⱼ, Lₖ ) locale du réseau qui est la zone ( Z₁, Z₂ ) de destination du déplacement des participants ( 3a, 3b, 3c ) respectifs à la circulation,
- une unité ( 17 ) de compteur qui détermine le nombre des participants ( 3a, 3b, 3c ) à la circulation, qui se sont déplacés d'une zone (Q1, Q2 ) d'origine déterminée à une zone ( Z₁, Z₂ ) de destination déterminée,
- une interface ( 19 ) de sortie pour acheminer des données ( ZD ) de compteurs de l'unité ( 17 ) de compteur,
- l'unité ( 9 ) d'analyse de demande de circulation étant conçue pour définir une zone ( Lᵢ, Lⱼ, Lₖ ) locale du réseau, comme zone ( Q₁ Q₂ ) d'origine ou comme zone ( Z1, Z2 ) de destination d'un participant ( 3a, 3b, 3c ) à la circulation, lorsque le terminal ( 5a, 5b, 5c, 5d, 5e, 5f ) de téléphone mobile du participant ( 3a, 3b, 3c ) à la circulation s'y est trouvé d'abord, pendant un laps de temps défini à l'avance, avant ou après un changement de la zone ( Lᵢ, Lⱼ, Lₖ ) locale du réseau, le laps de temps défini à l'avance étant fixé en fonction de la dimension de la zone ( Lᵢ, Lⱼ, Lₖ ) locale du réseau dans lequel le terminal ( 5a, 5b, 5c, 5d, 5e, 5f ) de téléphone mobile se trouve.
